# EUROPÄISCHE PATENTSCHRIFT

(11) **EP 1 975 437 B1**
(45) Veröffentlichungstag und Bekanntmachung des Hinweises auf die Patenterteilung: **10.09.2014**
(21) Anmeldenummer: 08003634.6
(22) Anmeldetag: 28.02.2008
(51) Int. Cl.: F16D 21/06

(54) **Drehmomentübertragungseinrichtung**
Torque transmission device
Dispositif de transmission de couple

(30) Priorität: 22.03.2007 DE 102007013792
(43) Veröffentlichungstag der Anmeldung: 01.10.2008
(73) Patentinhaber: Schaeffler Technologies GmbH & Co. KG, 91074 Herzogenaurach (DE)
(72) Erfinder: Friedmann, Oswald, 77839 Lichtenau (DE)

(56) Entgegenhaltungen:
- EP-A2- 1 632 687
- WO-A1-2008/064648
- FR-A1- 2 292 893
- FR-A1- 2 886 996
- FR-A1- 2 886 998
- US-A1- 2006 086 586

## Beschreibung

Die vorliegende Erfindung betrifft eine Drehmomentübertragungseinrichtung gemäß dem Oberbegriff des Patentanspruchs 1.

Bei herkömmlichen Drehmomentübertragungseinrichtungen mit einer Doppelkupplung, bei der die Zwischendruckplatte nach dem so genannten Wandlerhalsprinzip mit Hilfe eines teilweise rohrförmigen Stützelements radial an einer der Getriebeeingangswellen gelagert ist, wird die Axialkraft der Doppelkupplung an der Kurbelwelle abgestützt.

Eine Drehmomentübertragungseinrichtung gemäß dem Oberbegriff des Patentanspruchs 1 ist aus der FR 2 886 996 A1 oder der FR 2 886 998 A1 und EP1632687A2 oder WO2008/064648 bekannt.

Aufgabe der Erfindung ist es, die Lagerung einer Drehmomentübertragungseinrichtung zu verbessern.

Erfindungsgemäß gelöst wird diese Aufgabe durch eine Drehmomentübertragungseinrichtung gemäß Patentanspruch 1 im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit zwei Getriebeeingangswellen, die jeweils mit einer Reibbeläge aufweisenden Kupplungsscheibe einer Doppelkupplung drehfest verbunden sind, wobei zwischen den Reibbelägen der einen Kupplungsscheibe und den Reibbelägen der anderen Kupplungsscheibe eine Zwischendruckplatte angeordnet ist, die drehfest mit der Abtriebswelle der Antriebseinheit verbunden und getriebeseitig über ein teilweise rohrförmiges Stützelement mittels eines Radiallagers an einer der Getriebeeingangswellen abgestützt ist, wobei die Zwischendruckplatte antriebsseitig radial an der Abtriebswelle der Antriebseinheit abgestützt ist, wobei die Zwischendruckplatte mittels eines Axiallagers über das rohrförmige Stützelement an einer der Getriebeeingangswellen abgestützt ist.

Bei einer Abstützung der Axialkraft der Doppelkupplung an der Kurbelwelle bestimmt die Kurbelwelle auch die axiale Lage der Doppelkupplung nach der Montage des Getriebes am Motor. Daher kann die Gesamtgetriebeabnahme erst nach der Montage des Getriebes am Motor erfolgen. Durch die axiale Abstützung der Zwischendruckplatte an einer der Getriebeeingangswellen kann die Toleranz zwischen der Zungenhöhe der Doppelkupplung und einem Einrücklager zur Betätigung der Doppelkupplung deutlich reduziert werden. Vorzugsweise erfolgt die radiale Lagerung der Doppelkupplung antriebsseitig über eine so genannte Flexplate an der Abtriebswelle der Antriebseinheit. Die Zwischendruckplatte ist an dem rohrförmigen Stützelement befestigt. Vorzugsweise ist in die Kupplungsscheiben jeweils eine Drehschwingungsdämpfungseinrichtung integriert.

Ein bevorzugtes Ausführungsbeispiel der Drehmomentübertragungseinrichtung ist dadurch gekennzeichnet, dass das Axiallager zwischen der antriebsseitigen radialen Abstützung und dem Radiallager angeordnet ist. Das Axiallager ist vorzugsweise als Wälzlager ausgeführt, kann aber auch als Gleitlager ausgeführt sein.

Ein weiteres bevorzugtes Ausführungsbeispiel der Drehmomentübertragungseinrichtung ist dadurch gekennzeichnet, dass das Axiallager als Wälzlager, insbesondere Kugellager oder Nadellager, mit einem Lagerring ausgeführt ist, der in axialer Richtung an einer Nabe der antriebsseitigen Kupplungsscheibe abgestützt ist. Der Lagerring ist zum Beispiel mit Hilfe eines Presssitzes an der Nabe befestigt.

Ein weiteres bevorzugtes Ausführungsbeispiel der Drehmomentübertragungseinrichtung ist dadurch gekennzeichnet, dass das Wälzlager einen weiteren Lagerring umfasst, der in axialer Richtung an dem rohrförmigen Stützelement abgestützt ist. Der weitere Lagerring kann direkt oder indirekt über ein weiteres Teil an dem rohrförmigen Stützelement abgestützt sein.

Ein weiteres bevorzugtes Ausführungsbeispiel der Drehmomentübertragungseinrichtung ist dadurch gekennzeichnet, dass zwischen dem weiteren Lagerring und der Nabe ein radiales Spiel vorgesehen ist, wodurch eine radiale Verschiebung des weiteren Lagerrings relativ zu dem rohrförmigen Stützelement ermöglicht wird. Dadurch wird ein Mittenversatzausgleich ermöglicht. Bei einem Axialnadellager kann der Mittenversatz durch eine Gleitbewegung der Nadeln ausgeglichen werden.

Ein weiteres bevorzugtes Ausführungsbeispiel der Drehmomentübertragungseinrichtung ist dadurch gekennzeichnet, dass in axialer Richtung zwischen dem weiteren Lagerring und dem rohrförmigen Stützelement ein axial steifes Versatzausgleichsteil angeordnet ist, das in Querrichtung elastisch verformbar ist. Durch die Verformung in Querrichtung wird ein Mittenversatzausgleich ermöglicht.

Ein weiteres bevorzugtes Ausführungsbeispiel der Drehmomentübertragungseinrichtung ist dadurch gekennzeichnet, dass das Versatzausgleichsteil einen rohrförmigen Abschnitt aufweist, in dem sich in axialer Richtung erstreckende Schlitze ausgespart sind. Alternativ kann das Versatzausgleichsteil, zumindest teilweise, aus einem elastischen Material, wie Gummi, gebildet sein.

Ein weiteres bevorzugtes Ausführungsbeispiel der Drehmomentübertragungseinrichtung ist dadurch gekennzeichnet, dass die Nabe an dem antriebsseitigen Ende einer der Getriebeeingangswellen befestigt ist. Über die Nabe wird die die Axialkraft der Doppelkupplung in die Getriebeeingangswelle eingeleitet.

Ein weiteres bevorzugtes Ausführungsbeispiel der Drehmomentübertragungseinrichtung ist dadurch gekennzeichnet, dass die Nabe mit Hilfe einer Zentralschraube, die in ein zentrales Gewindesackloch an dem antriebsseitigen Ende der Getriebeeingangswelle eingeschraubt ist, an der Getriebeeingangswelle befestigt ist. Vorzugsweise ist zwischen einem Kopf der Zentralschraube und dem antriebsseitigen Ende der Getriebeeingangswelle ein axialer Sicherungsring eingespannt, an dem sich die Nabe in axialer Richtung abstützt.

Ein weiteres bevorzugtes Ausführungsbeispiel der Drehmomentübertragungseinrichtung ist dadurch gekennzeichnet, dass eine der Getriebeeingangswellen als Vollwelle und die andere Getriebeeingangswelle als Hohlwelle ausgeführt ist, wobei das rohrförmige Stützelement einen Lagerabschnitt umfasst, durch den das rohrförmige Stützelement in radialer Richtung zwischen den beiden Getriebeeingangswellen an einer von diesen radial gelagert ist. Der Lagerabschnitt ist vorzugsweise an dem getriebeseitigen Ende des rohrförmigen Stützelements vorgesehen. Vorzugsweise ist das rohrförmige Stützelement auch in axialer Richtung an der zugehörigen Getriebeeingangswelle abgestützt.

Ein weiteres bevorzugtes Ausführungsbeispiel der Drehmomentübertragungseinrichtung ist dadurch gekennzeichnet, dass die Nabe ein Nabenaußenteil umfasst, das drehfest und lösbar mit einem Nabeninnenteil verbunden ist, an dem sich der Lagerring in axialer Richtung abstützt. Die beiden Nabenteile sind vorzugsweise durch eine mit Verdrehspiel ausgeführte Verzahnung miteinander verbunden. Das Nabeninnenteil ist durch eine weitere Verzahnung mit einer der Getriebeeingangswellen drehfest verbunden. Die weitere Verzahnung ist vorzugsweise verdrehspielfrei ausgeführt, damit das Gesamtverdrehspiel nicht zu groß wird. Durch die zweiteilige Ausführung der Nabe wird die Montage vereinfacht.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Drehmomentübertragungseinrichtung gemäß einem ersten Ausführungsbeispiel mit einem Kugellager im Halbschnitt;
- Figur 2: ein ähnliches Ausführungsbeispiel wie in Figur 1 mit einem Versatzausgleichsteil im Halbschnitt;
- Figur 3: das Versatzausgleichsteil aus Figur 2 im Längsschnitt und
- Figur 4: ein ähnliches Ausführungsbeispiel wie in den Figuren 1 und 2 mit einem Axialnadellager im Halbschnitt.

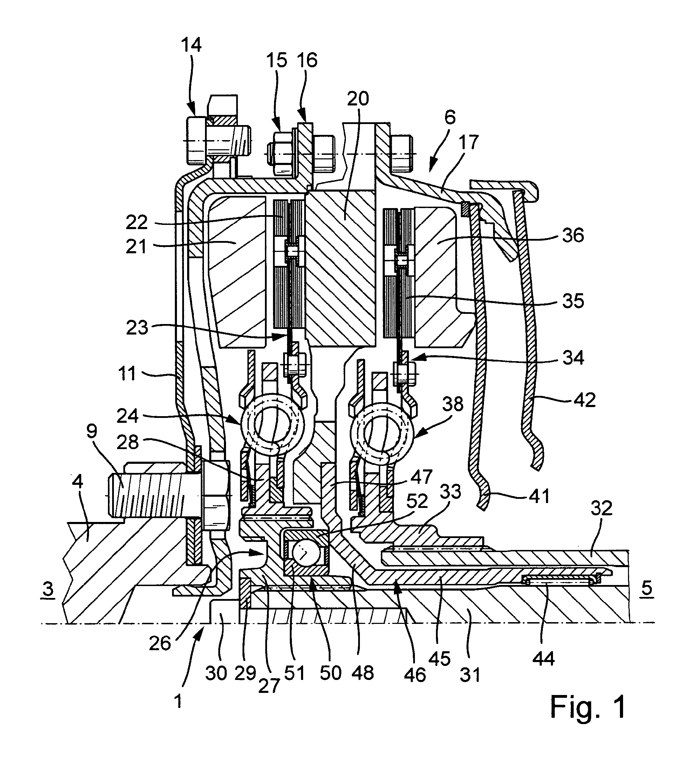

In den Figuren 1, 2 und 4 ist jeweils ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Doppelkupplung 6 angeordnet. Mit Hilfe von Schraubverbindungen 9 ist eine so genannte Flexplate 11 an der Kurbelwelle 4 befestigt. Die Flexplate 11 ist radial außen mit Hilfe von weiteren Schraubverbindungen 14, 15 und zum Beispiel durch (nicht sichtbare) Blattfederelemente drehfest mit einem Kupplungsgehäuse 16 verbunden. Bei der Flexplate 11 handelt es sich um ein flanschartiges Blechteil, das einen Versatzausgleich, insbesondere in axialer Richtung, ermöglicht. Das Kupplungsgehäuse 16 umfasst einen Kupplungsdeckel 17, der fest mit einer Zwischendruckplatte 20 verbunden ist.

Antriebsseitig sind zwischen der Zwischendruckplatte und einer ersten Druckplatte 21 Reibbeläge 22 einer ersten Kupplung einklemmbar. In die erste Kupplungsscheibe 23 ist eine Drehschwingungsdämpfungseinrichtung 24 integriert. Die erste Kupplungsscheibe 23 umfasst eine Nabe 26, die zweiteilig ausgeführt ist und ein Nabeninnenteil 27 und ein Nabenaußenteil 28 umfasst. Das Nabeninnenteil 27 der Nabe 26 ist mit Hilfe eines axialen Sicherungsrings 29 und mit Hilfe einer Zentralschraube 30 an dem antriebsseitigen Ende einer ersten Getriebeeingangswelle 31 in axialer Richtung festgelegt. Der axiale Sicherungsring 29 ist zwischen einem Schraubenkopf der Zentralschraube 30 und dem antriebsseitigen Ende der Getriebeeingangswelle 31 eingespannt. Die erste Getriebeeingangswelle 31 ist als Vollwelle ausgeführt und erstreckt sich größtenteils innerhalb einer zweiten Getriebeeingangswelle 32, die als Hohlwelle ausgeführt ist.

Eine Nabe 33 einer zweiten Kupplungsscheibe 34 ist drehfest mit der zweiten Getriebeeingangswelle 32 verbunden. An der zweiten Kupplungsscheibe 34 sind radial außen Reibbelagelemente 35 einer zweiten Kupplung angebracht. Die Reibbelagelemente 35 sind zwischen einer zweiten Druckplatte 36 und der Zwischendruckplatte 20 einklemmbar. Des Weiteren ist in die zweite Kupplungsscheibe 34 eine Drehschwingungsdämpfungseinrichtung 38 integriert. Die Betätigung der Kupplungen erfolgt durch Betätigungshebeleinrichtungen 41, 42.

Mit Hilfe eines Nadellagers 44 ist ein rohrförmiger Abschnitt 45, der auch als Lagerabschnitt bezeichnet wird, eines Stützelements 46 drehbar auf der ersten Getriebeeingangswelle 31 gelagert. Das Stützelement 46 umfasst einen sich im Wesentlichen in radialer Richtung erstreckenden Flansch 47, an dem die Zwischendruckplatte 20 befestigt ist. Der Flansch 47 ist durch einen Verbindungsabschnitt 48 einstückig mit dem rohrförmigen Abschnitt 45 verbunden.

Bei dem in Figur 1 dargestellten Ausführungsbeispiel ist die Doppelkupplung 6, insbesondere die Zwischendruckplatte 20 der Doppelkupplung 6, durch ein Axiallager 50 an der ersten Getriebeeingangswelle 31 in axialer Richtung abgestützt. Das Axiallager 50 ist als Kugellager ausgeführt und umfasst einen inneren Lagerring 51, der auch als Lagerinnenring bezeichnet wird, und einen äußeren Lagerring 52, der auch als Lageraußenring bezeichnet wird. Der Lagerinnenring 51 ist durch einen Presssitz fest mit dem Nabeninnenteil 27 verbunden. Der Lageraußenring 52 weist gegenüber dem Nabeninnenteil 27 sowohl radiales als auch axiales Spiel auf. Das Stützelement 46 liegt in axialer Richtung an dem Lageraußenring 52 an.

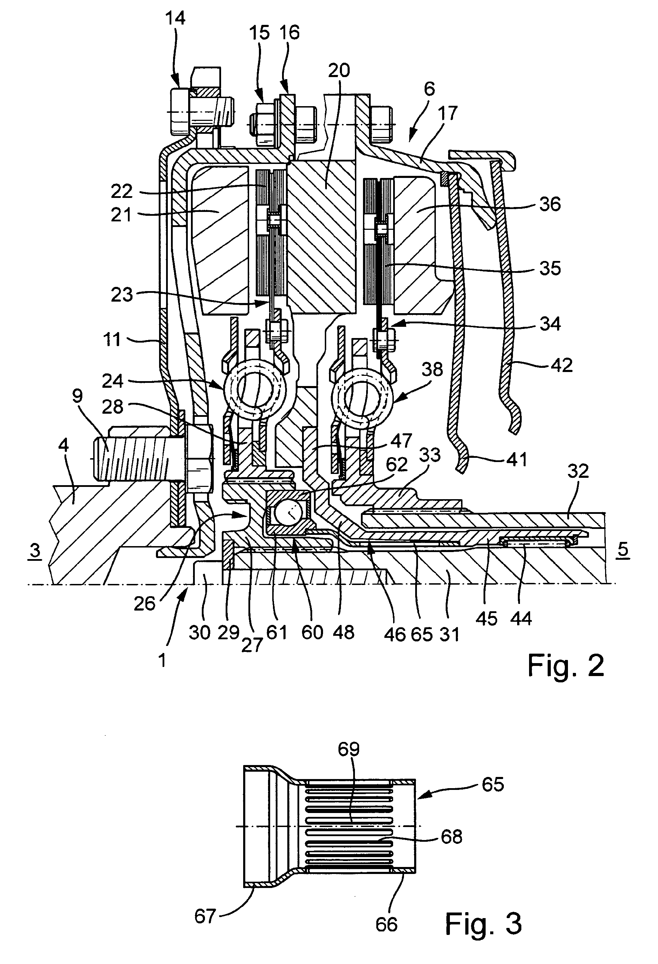

Bei dem in Figur 2 dargestellten Ausführungsbeispiel erfolgt die axiale Abstützung der Doppelkupplung 6 an der Getriebeeingangswelle 31 durch ein Axiallager 60, das als Kugellager ausgeführt ist und zwei Lagerringe 61, 62 umfasst. Der äußere Lagerring 62 ist in das Nabeninnenteil 27 eingepresst. Zwischen dem inneren Lagerring 61 und dem Nabenteil 27 ist sowohl in radialer als auch in axialer Richtung Spiel vorhanden. Das Stützelement 46 ist indirekt über ein Versatzausgleichsteil 65 in axialer Richtung an dem Lagerinnenring 61 abgestützt und umgekehrt. Das Versatzausgleichsteil 65 ist in axialer Richtung steif ausgeführt.

In Figur 3 ist das Versatzausgleichselement 65 allein im Längsschnitt dargestellt. In dieser Darstellung sieht man, dass das Versatzausgleichsteil 65 einen kreiszylindermantelförmigen Abschnitt 66 aufweist, der einstückig mit einem erweiterten Abschnitt 67 verbunden ist. In dem kreiszylindermantelförmigen Abschnitt 66 sind eine Vielzahl von Schlitzen 68, 69 ausgespart, die sich in axialer Richtung erstrecken. Die Schlitze ermöglichen, dass sich das Versatzausgleichsteil 65 in Querrichtung elastisch verformen kann. Dadurch wird ein Radialversatzausgleich ermöglicht.

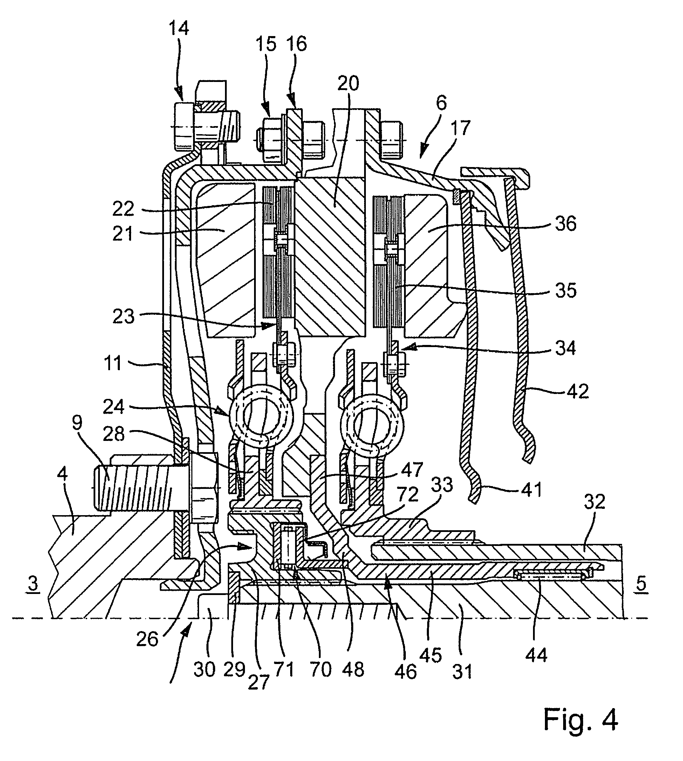

Bei dem in Figur 4 dargestellten Ausführungsbeispiel erfolgt die axiale Abstützung der Doppelkupplung 6 an der Getriebeeingangswelle 31 durch ein Axiallager 70, das als Nadellager ausgeführt ist. Das Axialnadellager 70 umfasst einen Lagerring 71, der durch einen Presssitz fest mit dem Nabeninnenteil 27 verbunden ist. In axialer Richtung zwischen dem Lagerring 71 und einem zweiten Lagerring 72 sind Nadeln des Axialnadellagers 70 angeordnet. Der Lagerring 72 weist einen winkelförmigen Querschnitt auf. Ein Schenkel des winkelförmigen Querschnitts liegt an den Nadeln des Axialnadellagers 70 an. Dieser Schenkel des Lagerrings 72 erstreckt sich, ebenso wie der Lagerring 71, in radialer Richtung. Der andere Schenkel des Lagerrings 72 erstreckt sich in axialer Richtung. Das getriebeseitige Ende des anderen Schenkels des Lagerrings 72 liegt an dem Stützelement 46 an.

## Patentansprüche

1. Drehmomentübertragungseinrichtung im Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit zwei Getriebeeingangswellen (31,32), die jeweils mit einer Reibbeläge (22,35) aufweisenden Kupplungsscheibe (23,34) einer Doppelkupplung (6) drehfest verbunden sind, wobei zwischen den Reibbelägen (22) der einen Kupplungsscheibe (23) und den Reibbelägen (35) der anderen Kupplungsscheibe (34) eine Zwischendruckplatte (20) angeordnet ist, die drehfest mit der Abtriebswelle (4) der Antriebseinheit (3) verbunden und getriebeseitig über ein teilweise rohrförmiges Stützelement (46) mittels eines Radiallagers (44) an einer der Getriebeeingangswellen (31,32) abgestützt ist, wobei die Zwischendruckplatte (20) antriebsseitig radial an der Abtriebswelle (4) der Antriebseinheit (3) abgestützt ist, wobei die Zwischendruckplatte (20) mittels eines Axiallagers (50,60,70) über das rohrförmige Stützelement (46) an einer der Getriebeeingangswellen (31,32) abgestützt ist und **dadurch gekennzeichnet, dass** das Axiallager (50,60,70) in axialer Richtung zwischen der antriebsseitigen radialen Abstützung und dem Radiallager (44) angeordnet ist.

2. Drehmomentübertragungseinrichtung nach Anspruch 1, **dadurch gekennzeichnet, dass** das Axiallager (50;60;70) als Wälzlager, insbesondere Kugellager oder Nadellager, mit einem Lagerring (51;62;71) ausgeführt ist, der in axialer Richtung an einer Nabe (26) der antriebsseitigen Kupplungsscheibe (23) abgestützt ist.

3. Drehmomentübertragungseinrichtung nach Anspruch 2, **dadurch gekennzeichnet, dass** das Wälzlager (50,60;70) einen weiteren Lagerring (52;61;72) umfasst, der in axialer Richtung an dem rohrförmigen Stützelement (46) abgestützt ist.

4. Drehmomentübertragungseinrichtung nach Anspruch 3, **dadurch gekennzeichnet, dass** zwischen dem weiteren Lagerring (52;61) und der Nabe (26) ein radiales Spiel vorgesehen ist, wodurch eine radiale Verschiebung des weiteren Lagerrings (52;61) relativ zu dem rohrförmigen Stützelement (46) ermöglicht wird.

5. Drehmomentübertragungseinrichtung nach Anspruch 3, **dadurch gekennzeichnet, dass** in axialer Richtung zwischen dem weiteren Lagerring (61) und dem rohrförmigen Stützelement (46) ein axial steifes Versatzausgleichsteil (65) angeordnet ist, das in Querrichtung elastisch verformbar ist.

6. Drehmomentübertragungseinrichtung nach Anspruch 5, **dadurch gekennzeichnet, dass** das Versatzausgleichsteil (65) einen rohrförmigen Abschnitt (66) aufweist, in dem sich in axialer Richtung erstreckende Schlitze (68,69) ausgespart sind.

7. Drehmomentübertragungseinrichtung nach einem der Ansprüche 2 bis 6, **dadurch gekennzeichnet, dass** die Nabe (26) an dem antriebsseitigen Ende einer der Getriebeeingangswellen (31,32) befestigt ist.

8. Drehmomentübertragungseinrichtung nach Anspruch 7, **dadurch gekennzeichnet, dass** die Nabe (26) mit Hilfe einer Zentralschraube (30), die in ein zentrales Gewindesackloch an dem antriebsseitigen Ende der Getriebeeingangswelle (31) eingeschraubt ist, an der Getriebeeingangswelle (31) befestigt ist.

9. Drehmomentübertragungseinrichtung nach einem der Ansprüche 1 bis 8, **dadurch gekennzeichnet, dass** eine der Getriebeeingangswellen (31,32) als Vollwelle und die andere Getriebeeingangswelle als Hohlwelle ausgeführt ist, wobei das rohrförmige Stützelement (46) einen Lagerabschnitt (45) umfasst, durch den das rohrförmige Stützelement (46) in radialer Richtung zwischen den beiden Getriebeeingangswellen (31,32) an einer von diesen radial gelagert ist.

10. Drehmomentübertragungseinrichtung nach einem der Ansprüche 2 bis 9, **dadurch gekennzeichnet, dass** die Nabe (26) ein Nabenaußenteil (28) umfasst, das drehfest und lösbar mit einem Nabeninnenteil (27) verbunden ist, an dem sich der Lagerring (51;62;71) in axialer Richtung abstützt.

## Claims

1. Torque transmission device in the drive train (1) of a motor vehicle for the transmission of torque between a drive unit (3), in particular of an internal combustion engine, having an output shaft (4), in particular a crankshaft, and a transmission (5) having two transmission input shafts (31, 32) which are connected fixedly in each case to a clutch plate (23, 34), having friction linings (22, 35), of a double clutch (6) so as to rotate with it, an intermediate pressure plate (20) being arranged between the friction linings (22) of the one clutch plate (23) and the friction linings (35) of the other clutch plate (34), which intermediate pressure plate (20) is connected fixedly to the output shaft (4) of the drive unit (3) so as to rotate with it and is supported on the transmission side on one of the transmission input shafts (31, 32) by means of a radial bearing (44) via a partially tubular supporting element (46), the intermediate pressure plate (20) being supported on the drive side radially on the output shaft (4) of the drive unit (3), the intermediate pressure plate (20) being supported on one of the transmission input shafts (31, 32) by means of an axial bearing (50, 60, 70) via the tubular supporting element (46), **characterized in that** the axial bearing (50, 60, 70) is arranged in the axial direction between the drive-side radial support and the radial bearing (44).

2. Torque transmission device according to Claim 1, **characterized in that** the axial bearing (50; 60; 70) is configured as an anti-friction bearing, in particular a ball bearing or a needle bearing, having a bearing ring (51; 62; 71) which is supported in the axial direction on a hub (26) of the drive-side clutch plate (23).

3. Torque transmission device according to Claim 2, **characterized in that** the anti-friction bearing (50, 60; 70) comprises a further bearing ring (52; 61; 72) which is supported in the axial direction on the tubular supporting element (46).

4. Torque transmission device according to Claim 3, **characterized in that** a radial play is provided between the further bearing ring (52; 61) and the hub (26), as a result of which a radial displacement of the further bearing ring (52; 61) relative to the tubular supporting element (46) is made possible.

5. Torque transmission device according to Claim 3, **characterized in that** an axially rigid offset compensation part (65) which can be deformed elastically in the transverse direction is arranged in the axial direction between the further bearing ring (61) and the tubular supporting element (46).

6. Torque transmission device according to Claim 5, **characterized in that** the offset compensation part (65) has a tubular section (66), in which slots (68, 69) which extend in the axial direction are cut out.

7. Torque transmission device according to one of Claims 2 to 6, **characterized in that** the hub (26) is fastened to the drive-side end of one of the transmission input shafts (31, 32).

8. Torque transmission device according to Claim 7, **characterized in that** the hub (26) is fastened to the transmission input shaft (31) with the aid of a central screw (30) which is screwed into a central threaded blind hole at the drive-side end of the transmission input shaft (31).

9. Torque transmission device according to one of Claims 1 to 8, **characterized in that** one of the transmission input shafts (31, 32) is configured as a solid shaft and the other transmission input shaft is configured as a hollow shaft, the tubular supporting element (46) comprising a bearing section (45), by way of which the tubular supporting element (46) is.mounted in the radial direction between the two transmission input shafts (31, 32) radially on one of the latter.

10. Torque transmission device according to one of Claims 2 to 9, **characterized in that** the hub (26) comprises a hub outer part (28) which is connected releasably and fixedly to a hub inner part (27) so as to rotate with it, on which hub inner part (27) the bearing ring (51; 62; 71) is supported in the axial direction.

## Revendications

1. Dispositif de transfert de couple dans une chaîne cinématique (1) d'un véhicule automobile pour le transfert de couple entre une unité d'entraînement (3), en particulier un moteur à combustion interne, comprenant un arbre de sortie (4), en particulier un vilebrequin, et une transmission (5) avec deux arbres d'entrée de transmission (31, 32) qui sont connectés de manière solidaire en rotation à chaque fois à un disque d'embrayage (23, 34) présentant des garnitures de friction (22, 35) d'un double embrayage (6), entre les garnitures de friction (22) de l'un des disques d'embrayage (23) et les garnitures de friction (35) de l'autre disque d'embrayage (34) étant disposée une plaque de pression intermédiaire (20) qui est connectée de manière solidaire en rotation à l'arbre de sortie (4) de l'unité d'entraînement (3), et qui est supportée du côté de la transmission par le biais d'un élément de support de forme partiellement tubulaire (46) au moyen d'un palier radial (44) contre l'un des arbres d'entrée de transmission (31, 32), la plaque de pression intermédiaire (20) étant supportée du côté de l'entraînement radialement contre l'arbre de sortie (4) de l'unité d'entraînement (3), la plaque de pression intermédiaire (20) étant supportée au moyen d'un palier axial (50, 60, 70) par le biais de l'élément de support tubulaire (46) contre l'un des arbres d'entrée de transmission (31, 32) et **caractérisé en ce que** le palier axial (50, 60, 70) est disposé dans la direction axiale entre le support radial du côté de l'entraînement et le palier radial (44).

2. Dispositif de transfert de couple selon la revendication 1, **caractérisé en ce que** le palier axial (50 ; 60 ; 70) est réalisé sous forme de palier à roulement, en particulier sous forme de roulement à billes ou de palier à aiguilles, avec une bague de palier (51 ; 62 ; 71) qui est supportée dans la direction axiale sur un moyeu (26) du disque d'embrayage du côté de l'entraînement (23).

3. Dispositif de transfert de couple selon la revendication 2, **caractérisé en ce que** le palier à roulement (50, 60 ; 70) comprend une bague de palier supplémentaire (52 ; 61 ; 72) qui est supportée dans la direction axiale au niveau de l'élément de support de forme tubulaire (46).

4. Dispositif de transfert de couple selon la revendication 3, **caractérisé en ce qu'**entre la bague de palier supplémentaire (52 ; 61) et le moyeu (26) est prévu un jeu radial, de sorte qu'un déplacement radial de la bague de palier supplémentaire (52 ; 61) par rapport à l'élément de support de forme tubulaire (46) soit possible.

5. Dispositif de transfert de couple selon la revendication 3, **caractérisé en ce qu'**une pièce de compensation de décalage axialement rigide (65) est disposée dans la direction axiale entre la bague de palier supplémentaire (61) et l'élément de support de forme tubulaire (46), laquelle peut être déformée élastiquement dans la direction transversale.

6. Dispositif de transfert de couple selon la revendication 5, **caractérisé en ce que** la pièce de compensation de décalage (65) présente une portion de forme tubulaire (66) dans laquelle sont pratiquées des fentes (68, 69) s'étendant dans la direction axiale.

7. Dispositif de transfert de couple selon l'une quelconque des revendications 2 à 6, **caractérisé en ce que** le moyeu (26) est fixé au niveau de l'extrémité du côté de l'entraînement de l'un des arbres d'entrée de transmission (31, 32).

8. Dispositif de transfert de couple selon la revendication 7, **caractérisé en ce que** le moyeu (26) est fixé à l'arbre d'entrée de transmission (31) à l'aide d'une vis centrale (30) qui est vissée dans un trou borgne fileté central au niveau de l'extrémité du côté de l'entraînement de l'arbre d'entrée de transmission (31).

9. Dispositif de transfert de couple selon l'une quelconque des revendications 1 à 8, **caractérisé en ce que** l'un des arbres d'entrée de transmission (31, 32) est réalisé sous forme d'arbre massif et l'autre arbre d'entrée de transmission est réalisé sous forme d'arbre creux, l'élément de support de forme tubulaire (46) comprenant une portion de palier (45) par le biais de laquelle l'élément de support de forme tubulaire (46) est supporté radialement dans la direction radiale entre les deux arbres d'entrée de transmission (31, 32) sur l'un desdits arbres d'entrée de transmission.

10. Dispositif de transfert de couple selon l'une quelconque des revendications 2 à 9, **caractérisé en ce que** le moyeu (26) comprend une partie extérieure de moyeu (28) qui est connectée de manière solidaire en rotation et de manière desserrable à une partie intérieure de moyeu (27) sur laquelle s'appuie dans la direction axiale la bague de palier (51 ; 62 ; 71).
